# EUROPEAN PATENT APPLICATION

(11) **EP 1 283 458 A2**
(43) Date of publication of application: **12.02.2003**
(21) Application number: 02255571.8
(22) Date of filing: 08.08.2002
(51) Int. Cl.: G06F 1/00

(54) **Tamper resistant microprocessor using fast context switching**

(30) Priority: 08.08.2001 JP 2001241089
(71) Applicant: Kabushiki Kaisha Toshiba, Tokyo 105-8001 (JP)
(72) Inventor: Fujimoto, Kensaku, c/o Intellectual Property Div., Minato-ku, Tokyo (JP); Shirakawa, Kenji, c/o Intellectual Property Div., Minato-ku, Tokyo (JP); Hashimoto, Mikio, c/o Intellectual Property Div., Minato-ku, Tokyo (JP); Teramoto, Keiichi, c/o Intellectual Property Div., Minato-ku, Tokyo (JP); Ozaki, Satoshi, c/o Intellectual Property Div., Minato-ku, Tokyo (JP)
(74) Representative: Midgley, Jonathan Lee

(57) **Abstract**

In a tamper resistant microprocessor, a processor temporary key in a form of an encryption key of a secret key cryptosystem is generated at every occasion of an initialization of the microprocessor, according to a random number that is generated according to parameters used inside the microprocessor and that is different for different microprocessors. Then, the context is encrypted by using the processor temporary key and saved into the external memory, and recovered from the external memory and decrypted by using the processor temporary key.

## Description

### BACKGROUND OF THE INVENTION

### FIELD OF THE INVENTION

The present invention relates to a microprocessor with improved tamper resistance.

### DESCRIPTION OF THE RELATED ART

Due to the advances of the computer utilization techniques in recent years, it has become easier than ever to carry out analysis, copying, etc., of programs. For this reason, in order to make sure to protect secrets inside programs, there are demands for techniques to increase the difficulty (tamper resistance) in the analysis of secrets inside programs.

### (1) Tamper resistant software technique:

One known technique of this kind is the tamper resistant software technique (see David Aucsmith et al., "Tamper Resistant Software: An Implementation", Proceedings of the 1996 Intel Software Developer's Conference).

According to the technique disclosed in this reference, a part or a whole of the program is encrypted and then distributed/stored, and at a time of executing that program, the program itself decrypts the program and internal data, and encrypts them again after the execution is finished, if necessary.

However, the tamper resistant software technique is basically a technique for making it difficult to carry out the analysis using analysis tools such as disassembler, debugger, etc., so that as long as the program is executable by a conventional processor, it is always possible to analyze the execution process of the program by following it sequentially from the start of the program.

For example, the processor input/output signals or the memory contents at a time of executing the program can possibly be revealed by a device such as ICE (In Circuit Emulator) for monitoring the processor input/output signals, another program of a privileged level, etc. When the processor input/output signals or the memory contents are analyzed in such a way, the processing carried out by the program can be guessed and the secrets inside the program can be guessed.

For this reason, there are demands for a processor that has a function for maintaining secrecy of data handled inside the processor so that it cannot be looked up from the external program, analysis device, etc.

### (2) Processor using encryption/decryption:

There are techniques for protecting secrecy of programs and data by carrying out the encryption/decryption of programs inside the processor (see Hampson, U.S. Patent No. 4,847,902; Hartman, U.S. Patent No. 5,224,166; Davis, U.S. Patent No. 5,806,706; Takahashi et al., U.S. Patent No. 5,825,878; Buer et al., U.S. Patent No. 6,003,117; Japanese Patent Application Laid Open No. 11-282667 (1999), for example).

By using techniques disclosed in these references, the program can be distributed in a state protected by the cryptography. For the program distributed in such an encrypted form, it becomes cryptographically difficult to carry out the analysis of the execution process by the disassembler or the like, the alteration of the program to an intended state, etc., without knowing the cryptographic key.

However, these techniques do not account for the operation under the multi-process environment in which a plurality of processes (tasks, jobs, threads, etc.) are executed in parallel.

Under the multi-process environment, a plurality of processes are executed in time division by using a processing called context switching which saves/recovers information (context) indicating the execution state of the processor such as register values, etc., at a time of switching the process. In the process of this context switching, the privileged process such as the operating system (OS) can carry out reading/writing of the context of the processor.

For this reason, the privileged process such as OS can intentionally analyze secrets such as the operation of the program by reading the context of the program or altering the context.

### (3) Technique for encrypting/decrypting context by hardware:

In order to resolve this problem, the technique disclosed in U.S. patent application serial No. 09/781,158 carries out the context switching by hardware, and the context is saved into the memory after encrypting it at a time of the context saving, so that the privileged process such as OS cannot know the content of the context. In this way, it becomes cryptographically difficult to analyze secrets such as operation of the program by analyzing the context saved in the memory.

However, in this technique, the processing load of the context encryption/decryption is relatively heavy, and the overhead due to the context switching is large under the multi-process environment in which the context switching is carried out frequently. For this reason, there are demands for the lowering of the context switching load.

### (4) Lowering of context switching load:

For this reason, the technique disclosed in U.S. patent application serial No. 09/984,407, the high speed context switching is realized by the access control using a tag memory is the context switching. In this technique, the management of tags is entrusted to the OS, but from a viewpoint of increasing the difficulty in the alteration of the context, it has been desired to carry that out inside the processor.

For this reason, the technique disclosed in U.S. patent application serial No. 10/059,217, the management is simplified and carried out inside the processor. In this technique, a possibility for the encryption key of the context to be revealed to the external is lowered as a context key table is provided inside the processor, so that the symmetric key (the encryption key in the secret key cryptosystem) is used for the encryption of the context. As a result, it becomes possible to shorten the encryption processing time compared with the case of using the asymmetric key (the encryption key in the public key cryptosystem), so that it becomes possible to realize the faster context switching.

Also, in this technique, the context key is generated according to a random number that cannot possibly be guessed from the external at every occasion of the context saving, and this context encryption key is deleted from the context key table at a time of recovering the context. In this way, it is extremely difficult to decrypt the content of the context or alter it into an intended state from the external. Also, in this technique, even if an attempt to store the context saved in the memory into another region and recover it later on is made, the context cannot be recovered correctly because the context encryption key no longer exists. Consequently, the possibility for the context to be revealed can be lowered further.

In the technique disclosed in the above mentioned U.S. patent application serial No. 10/059,217, all the context keys of all the tamper resistant processes that exist simultaneously must be stored in the context key table provided inside the processor. These tamper resistant processes include not just processes in the executed state but also processes in the executable state or the waiting state.

However, the capacity of the context key table provided inside the processor is limited, so that the tamper resistant processes in excess of the number according to this capacity cannot exist simultaneously. Namely, in this processor, the number of the tamper resistant processes that can be executed simultaneously is limited by the capacity of the context key table.

In particular, under the multi-process, multi-user environment in which the number of processes to be operated simultaneously becomes large or at a time of executing the program such as OS that comprises a plurality of modules requiring the tamper resistance, there can be cases where the performance is lowered by the limitation on the number of the tamper resistant processes.

### BRIEF SUMMARY OF THE INVENTION

It is therefore an object of the present invention to provide a microprocessor in which the number of processes that can be executed simultaneously is not limited by the capacity of a table inside the microprocessor.

It is another object of the present invention to provide a microprocessor that can contribute to the improvement of the performance in the execution of the program in which the number of processes to be executed simultaneously is large.

According to one aspect of the present invention there is provided a microprocessor, comprising: a temporary key generation unit configured to generate an encryption key of a secret key cryptosystem at every occasion of an initialization of the microprocessor, according to a random number that is generated according to parameters used inside the microprocessor and that is different for different microprocessors; an operation information saving unit configured to encrypt operation information indicating an operation state of the microprocessor by using the secret key generated by the temporary key generation unit and store encrypted operation information into an external memory; and an operation information recovery unit configured to decrypt the encrypted operation information stored in the external memory, by using the secret key generated by the temporary key generation unit.

According to another aspect of the present invention there is provided a method for operating a microprocessor, comprising: generating an encryption key of a secret key cryptosystem at every occasion of an initialization of the microprocessor, according to a random number that is generated according to parameters used inside the microprocessor and that is different for different microprocessors; encrypting operation information indicating an operation state of the microprocessor by using the secret key generated by the generating step and storing encrypted operation information into an external memory; and decrypting the encrypted operation information stored in the external memory, by using the secret key generated by the generating step.

Other features and advantages of the present invention will become apparent from the following description taken in conjunction with the accompanying drawings.

### BRIEF DESCRIPTION OF THE DRAWINGS

Fig. 1 is a block diagram showing a configuration of a main portion of a microprocessor according to one embodiment of the present invention.

Fig. 2 is a block diagram showing a configuration of a main portion of a calculation processing unit in the microprocessor of Fig. 1.

Fig. 3 is a flow chart for an initialization processing in the microprocessor of Fig. 1.

Fig. 4 is a diagram showing an exemplary format of an encrypted context to be saved into an external memory by the microprocessor of Fig. 1.

Fig. 5 is a flow chart for a context saving processing in the microprocessor of Fig. 1.

Fig. 6 is a flow chart for a context saving processing in the microprocessor of Fig. 1.

### DETAILED DESCRIPTION OF THE INVENTION

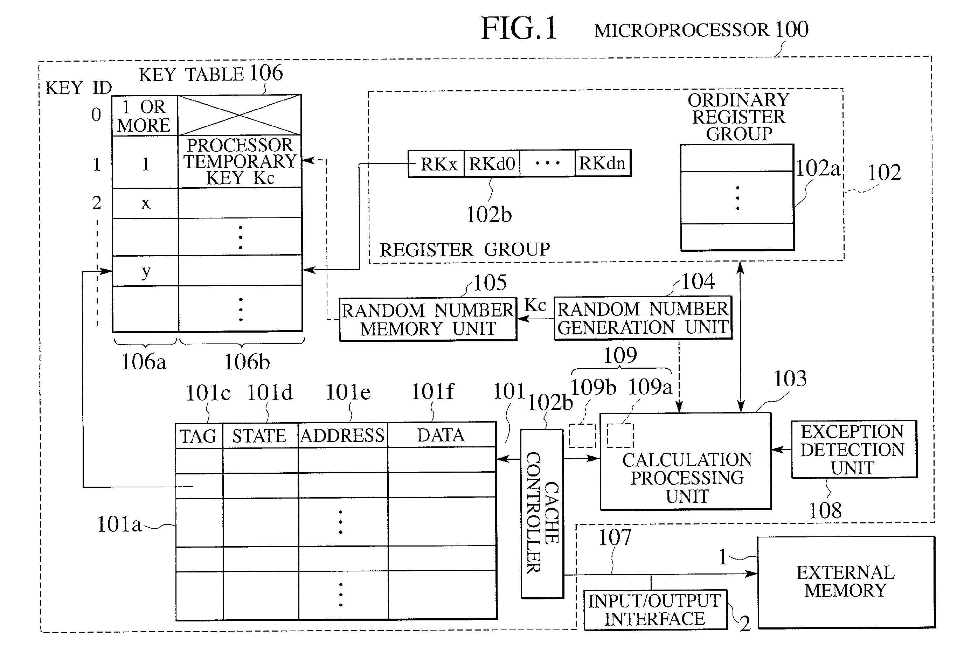

Referring now to Fig. 1 to Fig. 6, one embodiment of a microprocessor according to the present invention will be described in detail.

The present invention is applicable to a microprocessor equipped with a hardware mechanism for protecting secrets of programs, for example.

### 1. Configuration

The microprocessor according to one embodiment of the present invention has its main portion as shown in Fig. 1, which comprises a cache (secondary cache) 101 for enabling fast access to a memory (external memory) 1 provided outside the microprocessor 100 such as DRAM, for example, a register group 102 for storing data, calculation results, etc., a calculation processing unit (processor core) 103 for acquiring instructions and data from the cache 101, decoding instructions and carrying out processing such as calculation using the data, a random number generation unit 104 for generating a random number that cannot be known from outside the processor, a random number memory unit 105 for storing the generated random number, a key table 106 for the encryption key (the secret key of the secret key cryptosystem), a bus 107 connected to the external memory 1 or an interface to peripheral devices, an exception detection unit 108 for carrying out the processing according to an interruption request, and an encryption processing unit 109 for carrying out encryption/decryption of information (context) indicating an operation state of the microprocessor 100 such as contents of registers in the register group 102 at a time of switching among a plurality of processes including a program having a prescribed procedure for maintaining secrets (which will be referred to as tamper resistant program hereafter).

This microprocessor 100 is formed by a single chip or a plurality of chips sealed within a single package, for example. The package to be used should preferably be made by a material that is difficult to destroy in such a form that a chip of the microprocessor 100 contained therein will not be exposed, in order to make it difficult to analyze by connecting a probe directly to the chip. Also, the chip layout should preferably have only minimum necessary number of pads so that it is difficult to connect a probe directly to the random number generation unit 104 or the random number memory unit 105.

The cache 101 has a cache memory 101a made of a memory that is faster than the external memory 1 such as SRAM, for example, and a cache controller 101b for managing data reading from the external memory 1 to the cache memory 101a and data writing from the cache memory 101a to the external memory 1.

The cache memory 101a has a plurality of cache lines of a prescribed length similarly as the cache memory of an ordinary microprocessor. Each cache line has a tag storage region 101c for storing information (tag) for specifying a key for decrypting data on the external memory 1 corresponding to that cache line, a state storage region 101d for storing information indicating a state of the cache region, an address storage region 101e for storing an address of the cache region, and a data storage region 101f for storing data of the cache region. The storage regions 101c to 101f store tag, state, address and data in correspondence for each individual region to be cached under the control of the cache controller 101b. Also, the cache 101 is used for the purpose of maintaining decrypted program and data at a time of executing the tamper resistant program.

In Fig. 1, only one register group 102 is provided, but it is also possible to provide a plurality of register groups 102 in correspondence to the execution authorities (privileged levels) in the operation of the microprocessor 100, for example. However, in the following description, the case of providing only one register group 102 will be described for the sake of simplicity.

This register group 102 has a register group (ordinary register group) 102a similar to that of the conventional microprocessor such as general purpose registers, index registers, control registers, etc., for example, and a key register group 102b to be used in the execution of the encryption processing of the programs and the like. The contents of these ordinary register group 102a and key register group 102b indicate the operation state of the microprocessor 100, which will be referred to as context. This context is saved to the external memory 1 at a time of executing the interruption processing, for example.

The ordinary register group 102a has registers for storing values indicating calculation parameters, calculation results, program states, etc., similarly as that of the conventional microprocessor.

The key register group 102b has an execution key register RKx for storing information (key ID) indicating a region at which an execution key (decryption key) of the currently executed tamper resistant program is stored, for example, and data key registers RKd0 to RKdn for storing information (key ID) indicating regions at which the execution keys of data at a time of executing the currently executed tamper resistant program are stored.

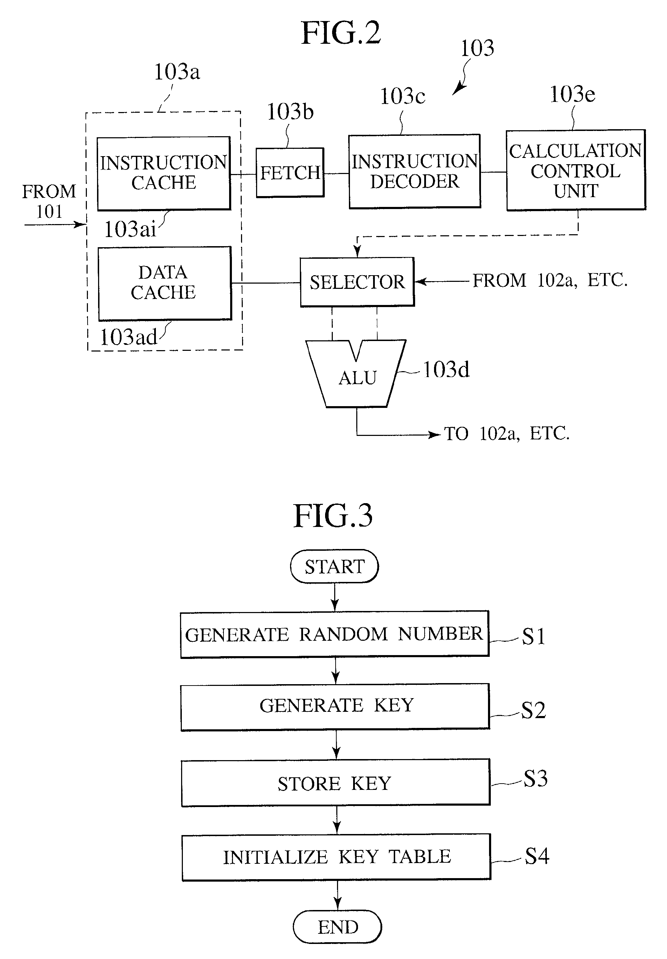

The calculation processing unit 103 carries out the processing of calculation, control, etc., in the execution of the operating system (OS), the application software, etc. As shown in Fig. 2, for example, this calculation processing unit 103 has a primary (L1) cache (= instruction cache 103ai + data cache 103ad) 103a, a fetch 103b for acquiring instruction and data (arguments for instructions, etc.) from the cache 101, the register group 102, etc., an instruction decoder 103c for decoding fetched instructions, a calculation unit (ALU: Arithmetic and Logic Unit) 103d for carrying out calculations among fetched data, and a calculation control unit 103e for carrying out control and the like of the operation of the register, the calculation unit, etc., according to the decoded instructions. The calculation control unit 103e carries out the processing according to the instruction by executing the microprogram according to the instruction decoded by the instruction decoder 103c, for example.

The random number generation unit 104 generates a random number of cryptographically sufficient quality every time the microprocessor 100 is reset, for example. More specifically, a random number (random number sequence) of cryptographically sufficient quality is generated according to the variation of a voltage, a timing, etc., due to the variation at a time of manufacturing the microprocessor 100, for example. Alternatively, it is also possible to use a quantum fluctuation as a seed of the random number, or it is also possible to provide a non-volatile entropy pool in the microprocessor 100 and generate the random number according to it.

By generating the random number according to the parameters inside the processor in this way, it is possible to generate the random number that is different for different processors so that it is hard to guess. In this way, it is possible to prevent the random number from being revealed to or guessed from the external.

Also, the random number generation unit 104 generates a key (processor temporary key) Kc for encryption which is changed every time the microprocessor 100 is reset, according to the random number so generated, and stores the generated processor temporary key Kc into the random number memory unit 105. This processor temporary key Kc is very difficult to guess from the external as it is generated according to the random number that is hard to guess as described above.

The random number memory unit 105 can have a configuration similar to the ordinary register, for example. Only the processor temporary key Kc from the random number generation unit 104 can be written into this random number memory unit 105. Also, the content of this random number memory unit 105 can be read out only by the encryption processing unit 109, for example. Thus this random number memory unit 105 cannot be referred from an ordinary program executed by the calculation processing unit 103.

The value of the processor temporary key Kc stored in this random number memory unit 105 will never be written out to the external memory 1. Also, in this microprocessor 100, the value of the processor temporary key Kc cannot be read out to the other registers, the cache 101, etc. FOr this reason, the user of the microprocessor 100 and the programs executed on the microprocessor 100 cannot refer to the value of the processor temporary key Kc.

The processor temporary key Kc stored in the random number memory unit 105 is used for encrypting the context to be saved to the external memory 1 as described above, for example. This processor temporary key Kc is very difficult to guess from the external as described above. For this reason, the encryption of the context to be saved to the external memory 1 is carried out by the encryption of the secret key cryptosystem. Namely, the processor temporary key Kc is used as a symmetric key, and this processor temporary key Kc is also used at a time of decrypting the context saved in the external memory 1 and recovering the values of the register group 102.

When the encryption of the context is carried out in this way by using the symmetric key generated according to the random number that is difficult to know from the external and that is changed every time the microprocessor 100 is reset, the possibility for the processor temporary key generated inside the microprocessor to be revealed to the external is low, so that the practically sufficient level of the tamper resistance can be maintained even when the encryption of the secret key cryptosystem is used for the encryption of the context. As a consequence, it is possible to reduce the processing load for the encryption compared with the case of using the encryption using the asymmetric key.

Also, the encryption of all the contexts is carried out by using the symmetric key that is changed at every occasion of the reset, so that there is no need to provide a table for storing the symmetric keys that are changed at every occasion of the context saving as required in the processor disclosed in U.S. patent application serial No. 10/059,217, for example. Consequently, the number of processes that can be executed simultaneously will not be limited by the table size, and it is possible to increase the number of processes that can be executed simultaneously.

Also, on the key table 106, entries (key IDs) more numerous than the number of registers inside the key register group 102b mentioned above are defined, and each entry contains a key data storage section 106b for storing the key for each key ID and a register look up counter 106a for indicating the number of times for which the key stored in the corresponding key data storage section 106b has been used.

The key data storage section 106b corresponding to each key ID is uniquely determined for the key ID, for example. For example, addresses are defined for a prescribed memory region in advance, and the encryption key corresponding to an address according to the key ID is stored into that address, such that there is no need to provide a separate region for storing the key ID.

Also, the keys stored in correspondence to the key IDs are mutually different and the identical key will not be stored in correspondence to different key IDs. This is guaranteed by the processing at a time of the execution of the instruction by the calculation processing unit 103, for example. However, when the key identical to the processor temporary key Kc is supplied accidentally, it is stored into the key data storage section 106b similarly.

Also, for each key ID, the corresponding encryption processing is defined. For example, the key ID "0" is defined as indicating a state that should not be encrypted, the key ID "1" is defined as indicating the encryption by the processor temporary key Kc, and the key IDs that are greater than or equal to "2" are defined as indicating the encryption by the respectively corresponding keys.

The state in which the value of the register look up counter 106a is "0" indicates the state where the corresponding key data storage section 106b is unnecessary. For this reason, the new key can be allocated to the key ID corresponding to this state. However, the above mentioned key ID "0" is always used for indicating the state of "no encryption", the register look up counter 106a corresponding to it will store the value greater than or equal to "1". But this key ID "0" is used fixedly so that the value of the register look up counter 106a corresponding to the key ID "0" itself has no meaning. For this reason, the value of the register look up counter 106a may be set fixedly as "1".

Also, unlike the value corresponding to the key ID "0", the value of the register look up counter 106a corresponding to the key ID greater than or equal to "1" is changed such that, when the key ID is set up in the register of the key register group 102b, the value of the register look up counter 106a corresponding to the set up key ID is incremented, and when the key ID set up in the register of the key register group 102b is cleared, the value of the corresponding register look up counter 106a is decremented. Also, when the register of the key register group 102 is to be saved by the context saving, if the key ID is stored in that register, the value of the register look up counter 106a corresponding to that key ID is decremented. Conversely, when the context is recovered, there are cases where the key ID is set up in the register of the key register group 102b. In such cases, the value of the register look up counter 106a corresponding to the newly set up key ID is incremented.

However, the key ID "1" always indicates the encryption by the processor temporary key Kc, so that this key ID "1" will not be released until the next reset. For this reason, the value of the register look up counter 106a corresponding to the key ID "1" is always controlled to be greater than or equal to "1".

This key ID is used only inside the microprocessor 100 in order to specify the key for decrypting the encrypted content of the external memory 1 when the calculation processing unit 103 executes the instruction that requires access to the external memory 1. This key ID cannot be referred from outside of the microprocessor 100.

Also, this key ID is specified by the register of the key register group 102b, but the program is only allowed to specify the register, and not allowed to read the value of the register or directly specify the value of the register. For this reason, the currently executed program itself cannot carry out the memory access by directly specifying the particular key ID (such as "1"), or directly change the content of the key table 106 by specifying the particular key ID, as these instructions are not defined in this microprocessor 100. Also, the calculation processing unit 103 is provided with a function for carrying out a management processing for realizing such a processing.

Also, the exception detection unit 108 detects an interruption request with respect to the microprocessor 100 or an error in the program execution (calculation, execution control, virtual memory (which may be related to TLB), etc.), and notifies it to the calculation processing unit 103.

When this exception detection unit 108 detects the interruption, the calculation processing unit 103 saves the above mentioned context to the external memory 1, for example. At this point, the encryption processing unit 109 encrypts the context to be saved by using the processor temporary key Kc corresponding to the key ID "1" in the key table 106, and the encrypted context is saved into the external memory 1 through the cache 101. At this point, the encrypted context that is temporarily stored in the cache 101 is written into the external memory 1 at a prescribed timing by the control from the cache controller 101b.

Also, the encryption processing unit 109 carries out the processing such as the encryption/decryption of the context, the encryption of data to be stored into the external memory 1, the decryption of data read out from the external memory 1, etc., according to commands from the above mentioned exception detection unit 108.

This encryption processing unit 109 can be provided in a form of a microprogram (109a) to be executed by the above mentioned calculation control unit 103e, or in a form of a functional block (109b) separate from the calculation processing unit 103.

In the case of providing it as a microprogram, the processing load of the calculation processing unit 103 is increased, but it suffices to change the microprogram so that the designing and manufacturing are relatively easy. In contrast, in the case of providing it as a functional block separate from the calculation processing unit 103, the hardware design load and the manufacturing cost are increased, but the processing load of the calculation processing unit 103 is not increased very much even when the context encryption processing is carried out. Consequently, the configuration of the encryption processing unit 109 can be appropriately changed according to the need.

Also, this encryption processing unit 109 carries out the processing for decrypting a program and data at a time of executing the tamper resistant program.

For this reason, this encryption processing unit 109 has a secret key (processor secret key) of the public key cryptosystem which is different for different microprocessors, and a public key (processor public key) corresponding to that secret key. The secret key is used only within the microprocessor 100 and concealed such that it will not be revealed to the external. In contrast, the public key is provided to the program provider and the like at a time of purchasing the tamper resistant program, for example. The program provider supplies the execution key of the tamper resistant program after encrypting it by using the provided public key, for example. The microprocessor 100 decrypts the execution key of the supplied encrypted program and executes the tamper resistant program, for example.

This decryption processing is carried out by using the encryption using an asymmetric key, for example, unlike the encryption of the context described above. For this reason, the encryption processing unit 109 has a decryption processing function for carrying out the decryption of the program and data for each program (or process) according to a secret key (asymmetric key) corresponding to the key ID specified by the prescribed data key register RKdm (m = 0, 1, ····· , n) in the above described key register group 102b which is specified according to the identification information for that program stored in the random number memory unit 105.

### (Outline of the operation to provide/execute the tamper resistant program)

The tamper resistant program is provided in a form of being encrypted by using the public key corresponding to the secret key unique to the individual microprocessor 100, for example.

The tamper resistant program so provided is stored into a supplementary memory device such as a hard disk drive (HDD) through the input/output interface 2. Before the execution, the tamper resistant program is read out from the supplementary memory device and stored in the external memory 1. In this state, the tamper resistant program is still in the encrypted form.

When the activation of the tamper resistant program is commanded, the cache controller 101b reads out that tamper resistant program from the external memory 1, supplies it to the encryption processing unit 109 in order to decrypt it, and stores the decrypted tamper resistant program into the cache 101, for example. This decryption is carried out by using the key stored in the key data storage section 106b with the value of the key ID greater than or equal to "2" in the key table 106 as described above.

The calculation processing unit 103 executes the tamper resistant program so decrypted and stored in the cache 101. When the execution of that program is finished, the content of the cache 101 is discarded.

The encryption processing unit 109 can learn the key ID of the key to be used for the decryption processing by referring to the values of these registers. The encryption processing unit 109 reads out the key corresponding to the key ID so learned from the key data storage section 106b at a time of the decryption, and carries out the decryption processing.

In this microprocessor 100, the key for decrypting each program or data is stored in the key data storage section 106b for each key ID. The key for decrypting the content of the encrypted memory block is specified by the key ID stored in the execution key register RKx and the data key register RKdm (m = 0, 1, ····· , n) of the above described key register group 102b.

Now, the microprocessor 100 is capable of executing a plurality of tamper resistant programs and ordinary programs that require no encryption processing, in parallel.

For this reason, this microprocessor 100 manages the decryption key (the secret key of the public key cryptosystem) for each individual tamper resistant program. As described above, the keys are specified by storing the key IDs in the execution key register RKx and the data key registers RKd0, ····· , RKdn of the above described key register group 102b.

As described above, this microprocessor 100 is provided with only one set of these registers RKx, RKd0, ····· , RKdn, so that in the case of executing a plurality of tamper resistant programs in parallel, the values of these registers RKx, RKd0, ····· , RKdn are temporarily saved into the external memory 1 along with the other contexts at a time of switching the process to be executed by the calculation processing unit 103 in time division. When the next execution time is allocated to the process for which the context saving has been carried out in this way, the saved context is recovered in the registers RKx, RKd0, ····· , RKdn. By such a context switching, the management of the key is carried out for each tamper resistant program.

Now, the capacity of the above described key table 106 is finite so that this microprocessor 100 is also capable of saving the content of the key data storage section 106b along with the context. By saving the content of the key data storage section 106b in this way, it becomes possible to release the key ID that corresponds to the key data storage section 106b whose content has been saved.

There are cases where the key is stored by the other program into the key data storage section 106b for which the key ID is released in this way. In such cases, this program may not release that key ID at a time of the context saving.

In such cases, an appropriate vacant key ID is allocated to the key to be recovered at a time of recovering the context of the earlier program. At this point, if any of the registers RKx, RKd0, ····· , RKdn to be recovered was specifying the key of that key ID before the context saving, the key ID before the saving is changed to the newly allocated key ID.

### (Memory protection according to the privileged levels)

Also, this microprocessor 100 is capable of carrying out the memory protection according to the privileged levels (general mode, privileged mode, etc.) of the processes. For this reason, this microprocessor 100 has a level storing function for storing the privileged level of the currently executed process, a limitation storing function for storing the memory access limitation for each privileged level, and a limiting function for executing the memory access according to the memory access limitation for the privileged level of the currently executed process. In this way, this microprocessor 100 is capable of realizing the memory protection according to the privileged level of the process.

However, there is no direct relationship between the memory protection by the privileged level and the encryption of data stored in the external memory 1 of the program or the like by the tamper resistant operation, so that they can be set up independently.

For example, the memory block in the external memory 1 may include memory blocks in which data that are readable and writable in the general mode are stored in encrypted forms, and non-tamper resistant memory blocks in which the plaintext data that are readable and writable only in the privileged mode,

Similarly, the tamper resistance is not directly related to the memory protection mechanism by the OS. However, the context switching occurs frequently between the program for controlling the system such as OS and the program such as application operated on that program. For this reason, when the processor has a plurality of privileged levels, the register group 102 can be provided for each privileged level and the register group 102 can be switched for each privileged level such that it becomes unnecessary to carry out the context switching at a time of switching of processes at different privileged levels. In this way, it is possible to reduce the load of the context processing and the associated processing such as the handling of the values of the registers in the key register group 102 as described above.

### (Relationship between the privileged level and the key table)

Only one key table 106 is provided even in the case of setting up a plurality of the privileged levels, but a part of the key IDs of the key table 106 may be reserved for the higher privileged level. In this way, in the case where the tamper resistant program is contained in the OS itself, for example, it is possible to lower the possibility of making the operation of the 0S unstable due to the shortage of the key table 106.

Note that, even in this case, it is preferable not to define any instruction for making an access to the external memory 1 by directly specifying a particular key ID ("1", for example) or changing the content of the key table 106, even if that instruction is to be defined only for the privileged level.

By such a configuration, it becomes possible to maintain the tamper resistance of each program as different programs have different execution keys even in the case where programs from different providers such as OS, applications, device drivers, etc., are to be executed at the same privileged level, for example. As a result, even when the provider of the OS and the provider of the application program or the device driver (a program for operating a particular device) are different, it becomes possible to maintain the secret of each program.

Also, the program such as 0S may use modules in a plurality of privileged modes provided by different providers. In such a program, there is a possibility for the malicious module or the like to consume the key table reserved for the privileged mode in order to make the OS inoperable. However, this possibility can be lowered by the method for verifying the signature of teach module by the 0S itself, separately from the tamper resistant function of the processor.

### (Relationship between the memory protection and the cache)

Now, when the microprocessor 100 makes an access to the external memory 1, whether the access to the address to be accessed is limited or not is judged according to the privileged level described above. In the case where the access is limited, the microprocessor 100 executes the exception processing or the processing for forcefully terminating the program by regarding it as a memory protection violation or a double fault. This operation is similar to the ordinary processor which has no tamper resistance function.

In this microprocessor 100, as described above, the access to the external memory 1 is possible only when it is not an access with respect to a region to which the memory access is limited according to the privileged level and the key stored in the key data storage section 106b that corresponds to the key ID stored in the tag storage region 101c is corresponding to the key by which the data in the region to be accessed on the external memory 1 is encrypted.

As described above, the operation in the case where the access with respect to the region to be accessed is limited is similar to that of the ordinary processor. For this reason, in the following description of the memory access, only the case where the access with respect to the region to be accessed is not limited by the memory protection similar to that of the ordinary processor will be described.

### 2. Initial setting

### (Clearing of the cache)

In the microprocessor 100 in the configuration as described above, when the power is turned on or the microprocessor 100 is reset, the content of the cache 101 is cleared first.

In the case where the power of the microprocessor 100 is turned on for the first time, the cache controller 101b clears the entire content of the cache memory 101a. In the case where the microprocessor 100 is reset for some other reason, the cache controller 101b sweeps out the data stored in the cache memory 101a to the external memory 1 before clearing the content of the cache memory 101a.

In the case of such a reset other than the turning on of the power, it is no absolutely necessary to clear those cache lines for which the key ID in the tag storage region 101c is "0", i.e., those cache lines which have the setting of no encryption. However, there is a need to clear those cache lines for which the key ID in the tag storage region 101c has a value other than "0" (including "1"). Consequently, the cache controller 101b checks the tag storage region 101c of each cache line and clears the content of that cache line if necessary.

At a time of sweeping out the cache line for which the key ID of the tag storage region 101c is "1" indicating the processor temporary key to the external memory 1 before clearing the cache, it is encrypted by using the processor temporary key Kc before the reset and stored into the external memory 1. Note that the processor temporary key Kc at this point will be changed soon, so that the data swept out to the external memory 1 will never be recovered as the normal data. For this reason, the data of the cache line swept out before the clearing of the cache can only be read as random data (appropriate data). The processor temporary key Kc is used for encrypting the context, so that the context stored in the cache 101 will never be recovered as normal data after the reset.

For this reason, at a time of sweeping out the cache line with the key ID of the processor temporary key in the tag storage region 101c due to the reset, it suffices to store the appropriate data without any encryption into the sweeping target region on the external memory 1. However, there is a need to make sure that the random data do not contain any information that can possibly be used as a clue to guess the random number generated by the random number generation unit 104 either explicitly or implicitly. More specifically, the random number generated by the method different from that of the random number generation unit 104 is used, for example.

### (Set up of the processor temporary key Kc)

After the content of the cache 101 is cleared as described above, the microprocessor 100 sets up the processor temporary key Kc. The value of this processor temporary key Kc is automatically set according to the random number of the cryptographically sufficient quality by the random number generation unit 104 at each occasion of the reset of the microprocessor 100, as described above. More specifically, as shown in Fig. 3, for example, the random number generation unit 104 generates the random number first (step S1), generates the processor temporary key Kc according to the generated random number (step S2), and stores the generated processor temporary key Kc into the random number memory unit 105 (step S3).

The random number so generated by the random number generation unit 104 is different for different microprocessors and cannot be revealed to or guessed from the external. For this reason, the value of the processor temporary key Kc is unknown to anything but this microprocessor 100.

Also, along with the set up of the processor temporary key Kc, the microprocessor 100 initializes the key table 106 (step S4). For example, the key ID "0" of the key table 106 is set as the key ID indicating "no encryption". A value greater than or equal to "1" is set in the register look up counter 106a corresponding to this key ID "0", and this value is not changed by the operation after the reset. Also, the key ID "1" is set as the key ID indicating the processor temporary key Kc, and the initial value "1" is set in the corresponding register look up counter 106a. The content of the key data storage section 106b for the key ID greater than or equal to "2" is entirely cleared, and the values of the corresponding register look up counter 106a are set to be "0".

After making such an initial setting at a time of the reset, the microprocessor 100 starts the execution of the processing from a prescribed address of the external memory 1.

After that, the microprocessor 100 makes a transition to the ordinary execution state, the initialization program such as IPL (Initial Program Loader) is activated, for example, and the program such as OS is activated according to the need.

### 3. Outline of the operation of the microprocessor

### (Transition to the tamper resistant state)

The program to be executed by the calculation processing unit 103 of the microprocessor 100 is in a form of binary codes at a time of the execution, but for the sake of ease in the comprehension, it will be expressed in terms mnemonics that are in one-to-one correspondence with the binary codes. The instructions expressed by the mnemonics are actually stored as the corresponding binary codes in the external memory 1, the cache 101, etc.

The program to be executed by the microprocessor 100 can execute the instruction for making a transition to the tamper resistant state in which the encrypted program is executed while decrypting it, regardless of its privileged level. This instruction for making a transition to the tamper resistant state is expressed by the following mnemonic, for example.
strtenc Ra, Rb

This "strtenc" instruction requires two operands. Ra is an operand for specifying a register, which specifies a value that indicates a top address of a memory block encrypted by the execution key (program execution key unique to the program. Rb is similarly an operand for specifying a register that indicates an address, which specifies an address of the program execution key encrypted by the processor public key.

This microprocessor maintains the processor secret key (the secret key of the asymmetric cryptosystem) unique to each microprocessor, similarly as the microprocessor disclosed in U.S. patent application serial No. 09/781,158, for example. A public key (processor public key) corresponding to this processor secret key is disclosed to the public, and the tamper resistant program is provided in a form of being encrypted by using this processor public key in advance.

When the "strtenc" instruction is executed, the encryption processing unit 109 decrypts data indicated by Rb by using the processor secret key according to the command from the calculation control unit 103e, and stores the extracted program execution key into a region corresponding to a prescribed key ID in the key table 106. In addition, the encryption processing unit 109 stores the key ID corresponding to the stored program execution key into the execution key register RKx. The concrete key registration procedure will be described in detail below.

After the key ID is stored in the execution key register RKx, the program continues the execution from an address specified by Ra. At this point, the address specified by Ra in the external memory 1 stores the program encrypted by the program execution key, but the calculation processing unit 103 can continue the execution of the program as the encryption processing unit 109 correctly decrypts this program according to the information stored in the execution key register RKx and the key table 106.

In the following, this state of executing the program while decrypting the program by using the program execution key will be referred to as the tamer resistant state. Conversely, the state of reading the plaintext program and executing the program as it is without decrypting the program on the external memory 1 will be referred to as an ordinary state, or a non-tamper resistant state.

### (Transition to the non-tamper resistant state)

A transition of the execution state of the microprocessor 100 from the tamper resistant state to the non-tamper resistant state can be made by methods including (A) a method using an explicit command, (B) a method using a processing of interruption/exception, etc., and (C) a method using a system call.

### (A) Transition to the non-tamper resistant state by an explicit command:

In the case of making a transition to the non-tamper resistant state explicitly, an instruction for explicitly making a transition to the non-tamper resistant state is executed in the program operating in the tamper resistant state. This instruction is expressed by the following mnemonic, for example.
endenc Ra

This "endenc" instruction requires one operand. Ra is an operand for specifying a register that indicates an address of the program whose execution is to be continued in the non-tamper resistant state.

When this "endenc" instruction is executed in the tamper resistant state, the calculation control unit 103e clears the entire content of the key register group 102b and then continues the execution of the program in the non-tamper resistant state from an address specified by Ra. Note that, in such a transition to the non-tamper resistant state by an instruction, the care should be taken at a time of creating the program such that no information to be concealed will remain in regions that can be referred from the other programs or the like such as the general registers.

### (B) Transition to the non-tamper resistant state by the interruption/exception:

In the case where the interruption or the exception (the execution of the exception instruction, the error in the address conversion, etc.) occurs during the execution of the program in the tamper resistant state, it is possible to make a transition to the non-tamper resistant state. Whether or not to make a transition to the non-tamper resistant state is determined according to the interruption permission condition, the processing suitable for the exception that has occurred, etc.

In such a transition, the microprocessor 100 saves the context such as the content of the register group 102 by the procedure to be described below. After that, the calculation control unit 103e clears contents of all the registers other than those registers that indicate the system state such as registers that indicate addresses that invoked the privileged level setting or the memory protection violation, among the registers in the ordinary register group 102a. In particular, there is a need to clear the general purpose registers as they have a possibility of storing data to be concealed.

After executing such a processing, the processing of the interruption/exception processing handler for executing the interruption/exception processing is started similarly as in the conventional processor. For example, in the case of the interruption, the processing defined at an address specified by the interruption vector is executed.

### (C) Transition to the non-tamper resistant state by a system call instruction:

When the application program executes the system call for calling up a function of the OS, the conventional processor uses a method in which the transition to the exception processing such as that of the OS at the privileged level or the like is made by executing the exception instruction, after setting up a function number indicating the function, parameters of that function, etc., in the general registers.

In contrast, this microprocessor 100 clears the content of the register group 102 when the exception instruction is executed as described above, so that the function number, the parameters, etc., will be lost from the registers in the register group 102 at a timing where the execution is shifted to the OS.

For this reason, this microprocessor 100 defines an instruction for the system call. This instruction is expressed by the following mnemonic, for example.
syscall Ra, Rb

This "syscall" instruction requires two operands. Ra is an operand that indicates a function number for specifying the function to be called up, and Rb is an operand that indicates parameters or an address at which the parameters are stored.

When the "syscall" instruction is executed in the non-tamper resistant state, the context is saved similarly as in the exception processing, and the ordinary register group 102a is cleared similarly. However, Ra and Rb are not cleared and left in the state of being stored in the registers as they are. In this way, the system call handler for executing the processing of the system call can acquire the necessary parameters.

Also, at a time of recovery from the system call to the original program, the register specified by the "syscall" instruction continues to maintain the value obtained by the system call, while the other registers of the register group 102 are recovered to the state before the system call.

In this microprocessor 100, the system call is realized by the processing described above.

### (D) Instruction specific to the non-tamper resistant state:

This microprocessor 100 is capable of executing instructions for calculation, control, etc., similarly as the conventional processor, while it is in the tamper resistant state and the non-tamper resistant state. In addition, this microprocessor 100 is capable of executing instructions specific to the tamper resistant state while it is in the tamper resistant state. In the following, such instructions specific to the tamper resistant state will be described.

### (1) Specification of the key ID by the data key register:

As described above, this microprocessor 100 is provided with a plurality of data key registers RKd0 to RKdn. These data key registers RKd0 to RKdn store the key IDs as described above.

In the tamper resistant state, when the microprocessor 100 executes an instruction that requires an access to the external memory 1, one key ID must be always used. In the following, this key ID will be referred to as the access key ID.

In this microprocessor 100, in the tamper resistant state, the data key registers RKd0 to RKdn corresponding to all the registers that can store addresses on the external memory 1 are fixedly determined among the ordinary register group 102a. For example, the data key register RKd2 is set in correspondence to the registers to be used mainly for storing addresses on the stack, and the data key register RKd1 is set in correspondence to the other general registers.

This microprocessor 100 is capable of specifying the register that stores an address to be accessed as an operand in the instruction for making an access to the external memory 1, similarly as the conventional processor. In this microprocessor 100, the value of one of the data key registers RKd0 to RKdn that is in correspondence to this register becomes the access key ID described above.

Also, depending on the instructions, there are cases where the program creation load can be reduced by setting the default value to a specific data key register RKdm (m = 0, 1, ····· , n) that is different from the ordinary data key registers that are fixedly determined as described above.

For this reason, this microprocessor 100 determines the data key register (default data key register) to be used when the memory access instruction and the operand for specifying the data key register according to its addressing mode, for some instructions. In the case where the data key register is not specified in such an instruction, the key ID stored in the predetermined default data key register is used as the access key ID described above.

By setting the data key register RKd1 and the data key register RKd2 described above appropriately, the memory access can be executed in most cases by the instruction similar to that of the ordinary operation (the non-tamper resistant state) by omitting the operand for specifying the data key register. Consequently, by determining the default access key ID as described above, the program creation load can be reduced.

The ordinary instruction for reading out data from the memory is expressed by the following mnemonic, for example.
load Ra, Rb

Here, Rb is an operand for specifying a register that indicates an address on the external memory 1, and Ra is an operand for specifying a register that stores the read out data.

In the case where Rb specified in such an instruction is a general register other than a prescribed register (a stack pointer, a base pointer, etc., for example), the calculation processing unit 103 regards a block on the external memory 1 that contains the address indicated by Rb as encrypted by the encryption key corresponding to the key ID that is stored in the data key register RKd1 defined as the above described access key ID. For this reason, the encryption processing unit 109 acquires the key corresponding to the key ID stored in the data key register RKd1 from the key table 106, according to a command from the calculation processing unit 103. In addition, the encryption processing unit 109 acquires the content of the address indicated by Rb, and decrypts it by using the key acquired earlier. The content of the address indicated by Rb that is decrypted in this way is stored in Ra.

### (2) Key register modification by the data key register:

On the other hand, in the case of making an access to the external memory 1 by using a key ID different from the key ID specified by the fixedly determined data key register, that different key ID is stored into the data key registers RKd1 and RKd2, and then the above described "load" instruction is executed or the key register modification is added to the "load" instruction". For example, in the case where it is desired to use the key ID indicated by the data key register RKd3 as the access key ID, for example, the "load" instruction expressed by the following mnemonic is executed.
load/kd3 Ra, Rb

Here, "/kd3" is the key register modification, which in this case implies that the processing similar to the "load" instruction "load Ra, Rb" should be executed by using the key corresponding to the key ID stored in the data key register RKd3 as the access key ID.

Also, the above described key ID "0" is always stored in RKd0. This key ID "0" indicates a state of "no encryption". In the case of carrying out the memory access without the encryption ("load", for example) in the tamper resistant state, the key register modification is made by this RKd0. An instruction to which such a key register modification is made is expressed by the following mnemonic, for example.
load/kd0 Ra, Rb

This implies that a block containing the memory address indicated by Rb is to be regarded as in the plaintext state and read into Ra as it is without decrypting the content of that block.

Also, the key register to be used for the key register modification is not limited to the above described data key registers RKd0 to RKdn. For example, it is also possible to make the key register modification by the execution key register RKx as follows.
load/kx Ra, Rb

This implies that the memory address indicated by Rb is to be regarded as contained in a block encrypted by the (program) execution key, and decrypted by using the current execution key corresponding to the key ID stored in the execution key register RKdx.

By defining the "load" instruction for decrypting the content of the memory by using the execution key in this way, it becomes possible to execute a program in which the secret data are safely embedded in an encrypted portion within the tamper resistant program in advance and referred at a time of the execution.

In this way, it is possible to contribute to the improvement of the safety of the data in the program. Also, it is possible to reduce the program creation load for such a program.

Note that the key register modification can be added not just to the above described "load" instruction but also to an arbitrary instruction that requires the memory access such as a calculation instruction, for example.

### (3) Loading of the key:

Also, this microprocessor 100 is capable of setting the key in the data key register. An instruction for this purpose is expressed by the following mnemonic, for example.
loadkd RKd, Ra

This "loadkd" instruction requires two operands. RKd is an operand for specifying one of the data key registers RKd1 to RKdn other than the data key register RKd0. Also, Ra is an operand for specifying a register that stores an address at which the symmetric key to be set is stored. Note that this instruction is to be executed in the tamper resistant state, so that the encrypted symmetric key is stored in the address that is stored in the register specified by this Ra. Consequently, the register specified by this Ra needs to have the key register modification by the key data register that stores the key ID for indicating the valid key other than the plaintext, made by any of the address modifications described above, in order to read out the encrypted symmetric key by decrypting it to the plaintext.

When the "loadkd" instruction is executed, the symmetric key stored in the address that is stored in Ra is read out. The read out symmetric key is decrypted by the key corresponding to the content (key ID) of the data key register that is modified as described above, and an appropriate vacant key ID is allocated to the decrypted symmetric key. Then, the decrypted symmetric key is stored into the key data storage section 106b corresponding to the allocated key ID. In parallel to this, the key ID allocated to this symmetric key is stored into the data key register specified by RKd.

It is also possible to add the key register modification to this "loadkd" instruction, similarly as the above described "load" instruction. The key register modified "loadkd" instruction is expressed by the following mnemonic, for example.
loadkd/kx RKd, Ra

Here, RKd is an operand for specifying a data key register, and Ra is an operand for specifying an address on the external memory 1. This "loadkd" instruction is modified by the execution key register RKx, so that the address specified by Ra can be contained in the same encrypted block as the program code encrypted by the current execution key corresponding to the key ID that is stored in the execution key register RKx.

By using such a "loadkd" instruction, it becomes possible to execute a program in which the fixed key to be used for referring data is embedded in an encrypted form in the program in advance, and referred at a time of the execution. In this way, it is possible to contribute to the improvement of the safety of the data in the program. Also, it is possible to reduce the program creation load for such a program.

### (4) Storing of the key:

Also, this microprocessor 100 is capable of storing the key for which the key ID is stored in the data key register from the key table 106 to the external memory 1. An instruction for this purpose is expressed by the following mnemonic, for example.
storek Ra, RK

Here, Ra is an operand for specifying a register that indicates an address on the external memory 1, and RK is an operand for specifying an arbitrary register (any of the data key registers RKdl to RKdn) in the key register set.

When this "storek" instruction is executed, the key corresponding to the key ID that is stored in the key register specified by RK is read out from the key data storage section 106b and stored into an address on the external memory 1 that is specified by Ra.

Now, the register specified by Ra is the key register modified similarly as the other memory access instruction in the above described tamper resistant state. For this reason, the encryption processing unit 109 encrypts the key to be written out by using the key corresponding to the key ID that is stored in the key register corresponding to the register specified by Ra and stores it into the external memory 1, according to a command from the calculation processing unit 103.

It is also possible to make the key register modification to this "storek" instruction, similarly as each instruction described above. The "storek" instruction in the case of making the key register modification is expressed by the following mnemonic, for example.
storek/kx Ra, RK

In this case, it has the key register modification by the execution key, so that the specified key that is encrypted by the current execution key is written out to the external memory 1 at a time of the execution.

This "storek" instruction writes out the key corresponding to the key ID itself, rather than the key ID stored in the key register. The key to be written out is encrypted in a prescribed way as described above, so that the actual value of the key corresponding to the key ID "0" cannot be directly learned from outside of the microprocessor 100.

Also, the key written out by this "storek" instruction can be set to the key table 106 again by the above described "loadkd" instruction. For this reason, it is possible to save many keys temporarily into the external memory 1 by the "loadkd" instruction and the "storek" instruction. In this way, it is possible to use many keys properly within the program.

### (5) Storing new temporary key into the data key register:

In this microprocessor 100, in order to store the already existing key into the key table 106, the above described "loadkd" instruction is used. The key to be read by this "loadkd" instruction may be generated by the program. In order to generate such a key, an appropriate random number is generated and the key is generated according to this random number, for example. The key so generated is used as a temporary key for the purpose of the encryption, for example.

Here, methods for generating a random number at the general purpose OS or the like include a method in which some kind of deterministic series is used as a pseudo random number, and a method in which values obtained according to timings of a timer or interruptions outside the processor are regarded as a non-deterministic series and the random number sequence is generated according to these values.

However, when the deterministic series is regarded as a pseudo random number, if the initial condition is the same, it is only possible to generate the random number sequence of the same series. For this reason, there is a problem that the random number sequence can be guessed from the external.

Also, in the case of generating the random number according to the values obtained according to factors occurring outside the processor such as a timer or interruptions, there is a possibility for the same random number sequence to be reproduced by making the same setting for the external environment such as that of a timer or interruptions.

For this reason, in order to improve the tamper resistance, the random number sequence that cannot possibly be guessed from the external must be generated inside the microprocessor.

To this end, this microprocessor 100 is provided with the random number generation unit 104 as described above. This random number generation unit 104 can be used in generating the processor temporary key Kc at a time of the context switching as described above, as well as in generating the key to be used from the program as described above. For this reason, the random number generated by the random number generation unit 104 is also supplied to the calculation processing unit 103.

The calculation processing unit 103 is capable of generating the key according to the random number supplied from the random number generation unit 104. An instruction for generating the key in this way is expressed by the following mnemonic, for example.
genrndkd RKd

This "genrndkd" instruction requires one operand. RKd is an operand for specifying one of the data key registers RKd1 to RKdn other than the data key register RKd0. When this "genrndkd" instruction is executed, the encryption processing unit 109 generates the key according to the random number acquired from the random number generation unit 104 according to a command from the calculation processing unit 103, and an appropriate vacant key ID is allocated to the generated key. When the key ID is allocated, the encryption processing unit 109 stores the key generated as described above into the key data storage section 106b corresponding to that key ID, and stores that key ID into the data key register specified by RKd.

The data key register in which the key ID is stored in this way can be subsequently used for the key register modification described above and the like, as the one that stores the valid encryption key.

### (6) Operation of the key ID among the key registers:

Also, this microprocessor 100 is capable of moving the key ID among the key registers. An instruction for this purpose is expressed by the following mnemonic, for example.
movekd RKd, RK

This "movekd" instruction requires two operands. RKd is an operand for specifying one of the data key registers RKd1 to RKdn other than the data key register RKd0. RK is an operand for specifying an arbitrary register in the key register set, where any of all the data key registers including RKd0 or the execution key register RKx can be specified. When this "movekd" instruction is executed, the key ID stored in the key register specified by RK is copied and stored into the key register specified by RKd. In particular, when RKd0 is specified as RK, the key ID "0" that indicates no encryption is substituted into the key register specified by RKd.

In the case where the execution key register RKx is specified as RK, it becomes possible to make an access to the data stored by using the same encryption key as the execution key in the program codes, by using the modification according to the data key register specified by RKd.

Also, this microprocessor 100 is capable of carrying out the exchange of the stored key IDs among the data key registers. An instruction for this purpose is expressed by the following mnemonic, for example.
exchgkd RKda, RKdb

This "exchgkd" instruction requires two operands. Each of RKda and RKdb is an operand for specifying one of the data key registers RKd1 to RKdn other than the data key register RKd0. Note that different data key registers are to be set to RKda and RKdb. When this "exchgkd" instruction is executed, the value (key ID) stored in the key register specified by RKda and the value (key ID) stored in the key register specified by RKdb are exchanged.

### 4. Details of the operation of the microprocessor

### (1) External memory access:

In the tamper resistant state, when the microprocessor 100 makes an access to the external memory 1, the calculation processing unit 103 makes an access by regarding an encryption block that contains an address to be accessed on the external memory 1 as being encrypted by using the key indicated by the access key ID.

### (a) Key ID to be used for the external memory access:

In this microprocessor 100, one key ID (access key ID) is always associated with the accesses with respect to the external memory 1.

At a time of executing the program in the non-tamper resistant state, the access key ID is "0" that indicates no encryption. Also, in the context saving/recovery due to the interruption or the exception, the access key ID is "1" that indicates the processor temporary key Kc. Also, at a time of reading the program in the tamper resistant state, the access key ID is the key ID stored in the execution key register RKx.

As described above, when the program in the tamper resistant state makes an access to the external memory 1, it is possible to make the key register modification for indicating which key register is to be used in the instruction for making that access. In the case where this key register modification is made, the access key ID is the key ID stored in the key register specified by that instruction.

In the case where is no such a key registration modification, the access key ID is the key ID stored in the default key register that is determined in advance by the memory access instruction and its address mode, as described above.

### (b) Relationship between the key ID and the cache memory:

In the case where the data of the address to be accessed by the calculation processing unit 103 is not stored in the cache 101 (the case where the cache 101 is miss), the cache controller 101b secures a new cache line. In order to secure a new cache line, there can be cases where it is necessary to release the old cache line, and the releasing of the cache line is done as already described separately.

After that, the cache controller 101b reads the data on the external memory 1 that is decrypted by the encryption processing unit 109 by using the key corresponding to the above described access key ID into the secured cache line, and stores the access key ID used for the decryption into the tag storage region 101c. When such a caching operation is finished, the calculation processing unit 103 makes an access to the cached data.

In the case where the data of the address to be accessed by the processor is stored in the cache 101 (the case where the cache 101 is hit), the cache controller 101b compares the content of the tag storage region 101c of the cache line that is hit with the access key ID. When they coincide, the content of that cache line is used as it is.

When the cache 101 is hit but the content of the tag storage region 101c and the access key ID do not coincide, the cache controller 101b releases this cache line. The releasing of the cache line is done as already described separately. After that, the cache controller 101b regards the data of the address to be accessed (the encryption block) as being encrypted by using the key indicated by the access key ID, reads the data that is decrypted by the encryption processing unit 109 into the cache line, and stores the access key ID into the tag storage region 101c, similarly as in the case of the cache miss. After that, the calculation processing unit 103 makes an access to the cached data.

In this case, at a time of the cache line releasing processing and the reading processing, it is also possible to achieve the fast realization by minimizing the external memory access by carrying out the processing only within the processor, without making an actual access to the external memory 1. Even in this case, it is in the state where the content of the tag storage region 101c and the access key ID do not coincide, so that there is a need to prevent the calculation processing unit 103 from making an access to the currently cached data directly. To this end, after encrypting the cached data by using the data of the tag storage region 101c, the data decrypted by using the access key ID is stored into that cache line, for example. After that, the calculation processing unit 103 makes an access to the cached data.

In this microprocessor 100, because of the uniqueness of the key ID described above, it is possible to achieve the fast realization of the access with respect to the external memory 1 by using the cache 101, by comparing the content of the tag storage region 101c of the cache 101 and the access key ID, minimizing the encryption/decryption processing of the actual data on the external memory 1, and carrying out the appropriate access limitation.

### (2) Operation of the key registers:

### (a) Setting of the values of the key registers:

In this microprocessor 100, the values are set to the key registers RKx and RKdi (i = 0, 1, ····· , n) at: (a) a time of executing the start instruction for the tamper resistant program, (b) a time of executing the load instruction for the data key issued in the tamper resistant program, and (c) a time of recovering the encrypted context.

In the setting of the value (key ID) for the key register, the calculation processing unit 103 first checks whether the key register to which the value is to be set is storing the valid ID on the key table or not. In the case where the key register stores the valid ID on the key table 106, the calculation processing unit 103 decrements the value of the register look up counter 106a of the corresponding key ID in the key table 106 by one. Note that, even when the value of the register look up counter 106a becomes zero, the corresponding key ID is not released immediately.

Next, the calculation processing unit 103 checks whether the key that coincides with the key to be set up exists in the key table 106 or not. In the case where there is an coinciding key, the calculation processing unit 103 increments the value of the register look up counter 106a corresponding this key by one, and stores the corresponding key ID into the key register.

In the case where there is no coinciding key exists in the key table 106, the calculation processing unit 103 looks for a vacant key ID in the key table 106. When there are vacant key IDs, the calculation processing unit 103 selects an arbitrary vacant key ID, stores the key into the key data storage section 106b corresponding to the selected key ID, and sets the value of the register look up counter 106b as one. Also, the calculation processing unit 103 stores the key ID into the key register.

In the case where there is no vacant key ID in the key table 106, the calculation processing unit 103 selects the key ID for which the value of the register look up counter 106a is zero. The number of key IDs in the key table 106 is greater than the number of registers in the key register group 102b, so that even when there is no vacant key ID, there is always a key ID for which the value of the register look up counter 106a is zero. The calculation processing unit 103 releases the selected key ID, and then, similarly as in the case where there is a vacant key ID, stores the key and sets the value of the key register.

### (b) Releasing of the key table entry:

In releasing the key ID from the key table 106, the calculation processing unit 103 first checks the cache memory 101 and releases all the cache lines for which the value of the tag storage region 101c coincides with the key ID to be released. In the case where there is a need to sweep out the content to the external memory 1 in order to release the cache lines, the content is encrypted by using the key stored in the corresponding key data storage section 106b and then swept out to the external memory 1.

When all the cache lines for which the value of the tag storage region 101c coincides with the key ID to be released are released, the calculation processing unit 103 checks that the key ID to be released is not stored in any of the registers in the key register group 102b. When the key ID to be released is not stored in any of the registers in the key register group 102b, the calculation processing unit 103 releases that key ID. In the case where the key ID to be released is stored in any of these registers, that key ID is currently in use so that this key ID is not released. This check is necessary in order to guarantee that all the key IDs used in the microprocessor 100 at a given moment are indicating appropriate keys.

### (c) Optimization of the key table entry releasing:

There are many methods for selecting the cache line to be released that have been proposed in order to optimize the caching efficiency. These methods can be utilized for the purpose of optimizing the selection of the key ID to be released.

### (3) Saving and Recovery of the context:

### (a) Context saving:

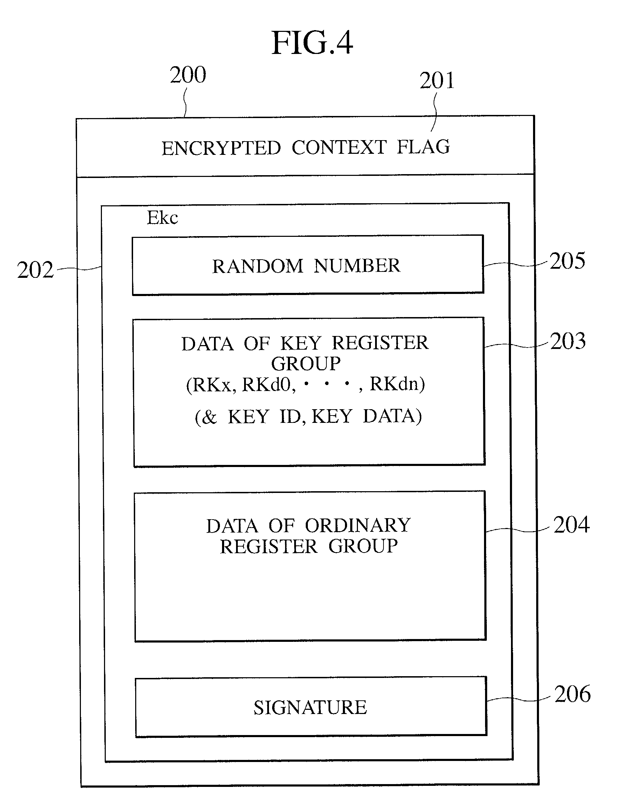

Fig. 4 shows a format of the context (encrypted context) that is encrypted at a time of saving to the external memory 1 as described above.

As shown in Fig. 4, this encrypted context 200 has an encrypted context flag 201 for indicating a factor that has caused the context saving, and a payload 202 in which the encrypted context is to be stored.

The encrypted context flag 201 indicates whether the factor that has caused the context saving is the ordinary interruption or exception processing, or the above described system call.

The payload 202 stores data 203 of the registers of the register group 102a described above, data 204 of the registers of the key register group 102b. a random number 205 for shuffling the data in the payload 202, and a signature 206 for proving that the encrypted context is created by the microprocessor 100 itself.

The data 203 and 204 are shuffled according to the random number 205 such that the data 203 and 204 in the payload 202 take the different values even for the same context. The random number 205 should preferably be having a cryptographically sufficient randomness, different for different processors, changed every time the processor is reset, and difficult to guess from the external of the microprocessor 100. For this reason, it is generated by the random number generation unit 104 at every occasion of the saving of the individual context, for example.

Also, the signature 206 is added in order to prove the legitimacy of the data 203 and 204 and the random number 205. This signature 206 is for indicating that it is generated by the microprocessor 100, for example, and can be given in a form of a digest of the data 203 and 204 and the random number 205 that is generated by MD5 (Message Digest 5), which is an example of the hash functions, for example. Else, in the case where the entire context is set as a single encrypted block or appropriately chained in the encryption of the context using the processor temporary key Kc, the random number 205 itself can be used as the signature 206.

In the case where the entire context is appropriately chained, the calculation of the digest of the context can be omitted by utilizing the digest obtained in the encryption, so that it is possible to carry out the storing of the context relatively fast. Note however that, in this case, in order to avoid the change of the digest, the processing for changing the entropy of the context data such as the data compression should not be carried out to the context before the encryption.

Also, the whole of the data 203 and 204, the random number 205 and the signature 206 in the payload 202 is encrypted by the processor temporary key Kc. The encrypted context in such a configuration is generated by the encrypted processing unit 109 according to a command from the calculation processing unit 103 at a time of the context saving.

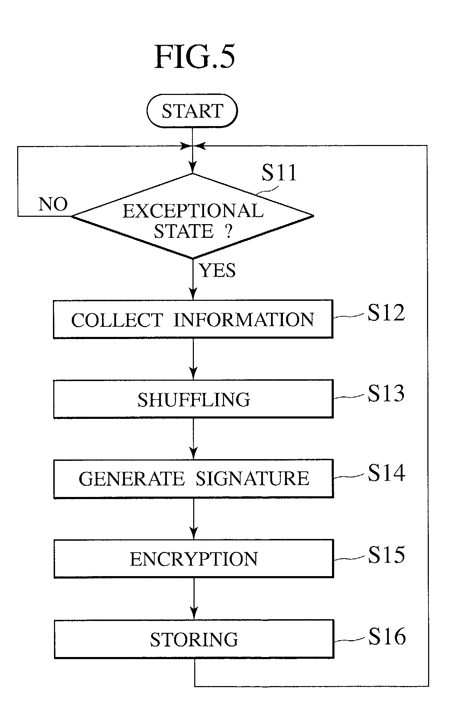

Fig. 5 shows a procedure for such a context saving. At a time of turning the power on or resetting the microprocessor 100, when the processor temporary key Kc is set as shown in Fig. 3 described above, the processing is started from the step S11 of Fig. 5. At the step S11, the exception detection unit 108 monitors the occurrence of the exceptional state such as the request for the context switching due to the interruption, process switching, etc., for example. As long as such an exceptional state does not occur, the exception detection unit 108 waits for the occurrence of the exceptional state at this step S11.

When the exceptional state occurs, the calculation processing unit 103 first collects informations to be saved as the context (step S12). More specifically, the calculation processing unit 103 acquires contents of the registers in the ordinary register group 102a that are not directly related to the tamper resistant operation, content (key ID) of the register in the key register group 102b that stores the key ID in the tamper resistant operation, the key in the key table 106 corresponding to this key ID, the random number for shuffling, etc.

When these informations are acquired, the calculation processing unit 103 shuffles the values of the registers in the register group 102 by using the random number for shuffling (step S13). After that, the calculation processing unit 13 generates a signature for showing the authenticity of the shuffled register values and the random number value used for the shuffling (step S14).

In addition, the calculation processing unit 103 sets these informations as data of prescribed regions 203 to 206 in the payload 202, and commands the encryption processing unit 109 to encrypt these data entirely by using the processor temporary key Kc (step S15). When the encryption by the encryption processing unit 109 is finished, the information indicating a cause of the context saving, the information indicating the encryption by using the processor temporary key Kc, etc., are added in the plaintext form as the encrypted context flag 201 to the encrypted context, and they are stored into a prescribed address on the external memory 1 (step S16). After that, the occurrence of the exceptional state is waited at the step S11 again.

When the context saving is finished, all the registers in the key register group 102b are cleared such that they are set in a state where no valid ID is specified.

Also, in the context saving described above, it is also possible to save the keys stored in the key table 106 at the same time. In the case of saving the keys as well, the key data are saved into the external memory 1 as the data in the payload 202, for example. In the case where the keys in the key table 106 are saved in this way, the values of the corresponding register look up counters 106a become zero, so that it becomes possible for the other process or the like to allocate the corresponding key IDs.

As described, in the context saving, (a) it is possible to use the encryption method of the secret key cryptosystem, because the processor temporary key Kc is generated according to the random number that is hard to learn from the external, and (b) the possibility for the processor temporary key Kc to be revealed to the external is low without generating a different key at every occasion of the context saving, because the value of the processor temporary key Kc is changed at every occasion of the reset. For this reason, it is possible to maintain the tamper resistance level even when the same key is used for all occasions of the context saving until the next reset.

Now, the microprocessor in which the encryption of the context is made by using a key (symmetric key) for which the possibility of being revealed to the external is higher compared with the processor temporary key Kc of this microprocessor 100, there is a need to use a different key at each occasion of the context saving by providing a plurality of keys in advance, for example, in order to maintain the tamper resistance level. In order to realize such a processing, there is a need to provide a table indicating the correspondence between the context to be saved and the key used in encrypting that context. The context saving is carried out when the processes are switched, so that in such a microprocessor, the number of processes that can be executed simultaneously is limited by the capacity of the above described table. Else, in order to increase the number of processes that can be executed simultaneously, a special processing such as the management of the keys by the software is separately required so that the performance is lowered.

In contrast, in this microprocessor 100, the same key is used for the context saving as described above, so that the number of processes that can be executed simultaneously will not be limited by the capacity of the table. Consequently, there is no need for a separate special processing and the performance will not be lowered.

### (b) Context recovery:

The microprocessor 100 is capable of recovering the context stored at arbitrary address in the external memory 1, by executing an instruction for recovering the context that was saved as described above.

This context recovery instruction is usually a privileged instruction that is used only in the system program such as OS, but it can also be executed by the programs other than the OS in the case of the microprocessor which uses no concept of the privileged instruction.

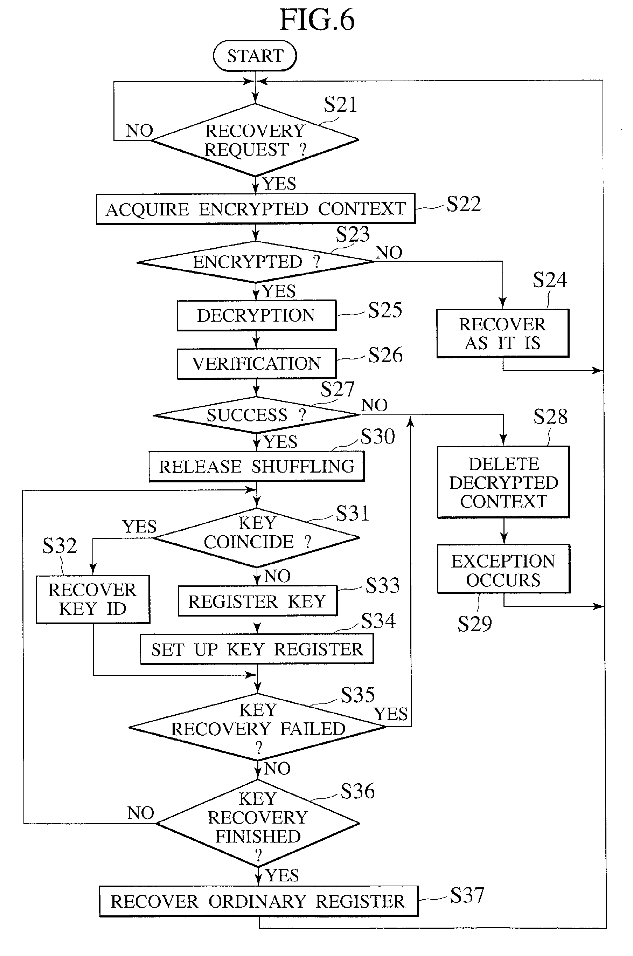

Fig. 6 shows such a context recovery processing. In this microprocessor 100, when the above described processor temporary key Kc is set at a time of turning the power on or at a time of the reset, the processing is started from the step S21 of Fig. 6. At this step S21, the calculation processing unit 103 judges whether there is a context recovery request or not. When there is no context recovery request, the calculation processing unit 103 waits for the context recovery request at this step S21.

When there is a context recovery request, the calculation processing unit 103 reads out the recovery requested encrypted context from the external memory 1 (step S22).

When the encrypted context is read out, the calculation processing unit 103 checks the encrypted context flag 201 (step S23). In the case where this flag indicates the plaintext, the encrypted context 202 is actually not encrypted, the calculation processing unit 103 recovers the content of the encrypted context 202 as the values of the registers in the register group 102 (step S24), and returns to the step S21 to wait for the next context recovery request,

On the other hand, in the case where the encryption flag 602 indicates that it is encrypted, the following processing is carried out atomically. First, the calculation processing unit 103 reads the encrypted context 202, and commands the decryption by using the processor temporary key Kc to the encryption processing unit 109 (step S25). In this way, the random number 205, the data 203 (data of the registers in the key register group 102b), the data 204 (data of the registers in the ordinary register group 102a), and the signature 206 are extracted.

After that, the calculation processing unit 103 verifies whether the data 203 and 204 and the random number 205 are authentic ones generated by the microprocessor 100 or not according to the signature 206 (step S26), and judges whether the verification is success or not (step S27).

When the verification fails, the context recovery is unsuccessful, so that the data 203 and 204, the random number 205 and the signature 206 that are decrypted as described above are deleted (step S28), and then the exception is caused (step S29), and the processing returns to the step S21 to wait for the context recovery request.

On the other hand, when the verification is successful, the calculation processing unit 103 restores the data 203 and 204 shuffled by the random number 205 to the original state (step S30). Note that once the signature is verified and the shuffled data are restored, the microprocessor 100 ignores the random number 205.

After that, the calculation processing unit 103 recovers the values of the registers RKd0 to RKdn in the key register group 102b and the keys corresponding to the key IDs stored in these registers (steps S31 to S36).

More specifically, the calculation processing unit 103 first takes out the key ID in the key register of the restored context, and compares the key in the key table 106 corresponding to this key ID with the corresponding key in the context (step S31). When these keys coincide, the key ID is recovered as it is in the corresponding key register (step S32).

When the keys do not coincide, the key in the context is newly registered into the key table 106 (step S33), and the key ID allocated by the registration is set as the value of the key register (step S34). This processing is carried out by executing the above described "strtenc" instruction, for example, similarly as in the case of the registration of the execution key at a time of starting the tamper resistant program and the registration of the data key in the tamper resistant program as described above.

Also, the calculation processing unit 103 judges whether the key recovery has failed or not (step S35) and if it has failed, the processing of the steps S28 and S29 described above is carried out without making the context recovery. When the key recovery has not failed, the calculation processing unit 103 judges whether the recovery of all the keys has finished or not (step S36), and if it has not finished, the recovery of the values of the remaining key registers is carried out (steps S31 to S36).

Only when the recovery of the values of all the key registers has finished, the other ordinary context is recovered. Namely, after the values of all the key registers are recovered, the calculation processing unit 103 recovers the values of the registers in the ordinary register group 102a (step S37). Then, when the context recovery is finished, the processing returns to the step S21 to wait for the context recovery request.

When the context is recovered as described above, the program corresponding to that context is set in the execution state during a prescribed number of time-slots, for example.

Note that, in the context recovery processing described above, the calculation processing unit 103 checks the cause of the context saving by using the encrypted context flag 201, and when it is the context saved by the system call instruction, the calculation processing unit 103 leaves those registers specified by the system call instruction in their current state without recovering the values before the context saving.

The recovery of the individual encrypted context ends up with either a result of being finished successfully by recovering the entire context (step S37) or a result of being failed for some reason in which case the recovery of the register values is not carried out at all and the exception is caused (step S29). For this reason, there will never be the case where only the content of a part of the registers is recovered. This measure is taken in order to prevent the operation of the tamper resistant program after the context recovery from becoming unstable.

### 5. Effects

In the microprocessor of this embodiment, it is possible to contribute to the fast realization of the context switching in which the context is encrypted and saved into the external memory 1, by carrying out the context encryption/decryption according to the symmetric key cryptosystem (secret key cryptosystem), by using the processor temporary key Kc generated according to the random number that is changed at every occasion of turning the power on or the reset as described above.

Also, in this microprocessor, the possibility for the value of the processor temporary key Kc to be guessed from the external of the microprocessor is extremely low as described above. Also, only the encryption processing unit 109 for carrying out the encryption/decryption processing is capable of referring to the value of the processor temporary key Kc. For this reason, the value of the processor temporary key Kc cannot be referred from the program or the like executed by the calculation processing unit 103, for example. Therefore, it becomes very difficult to directly decrypt the context saved in the external memory 1 or apply the intentional alteration.

Also, in this microprocessor, the program execution key is contained in the context to be saved, so that even when the saved contexts are exchanged between the different tamper resistant programs, it is impossible to continue the intended operation.

Also, in this microprocessor, there is no need to provide the context key table for storing the key for each context internally, so that the number of processes that can be executed in parallel is not limited by the capacity of the table. For this reason, it is possible to contribute to the increase of the number of processes that can be executed in parallel.

Also, in this microprocessor, the same processor temporary key Kc is used for the decryption of all the contexts, so that the possibility of recovering the same context twice or more cannot be completely denied. However, as described above, the processor temporary key Kc is changed at every occasion of the reset, so that the context before the reset cannot be recovered after the reset.

Also, in this microprocessor, as described above, the processor temporary key is generated according to the random number that cannot be guessed from the external and which is different for each individual processor, so that the value of the processor temporary key is different for each individual processor. For this reason, even when the external environment is made to coincide entirely, the processor temporary key is different if the microprocessor is different. Consequently, the context saved by one microprocessor cannot be recovered by the other microprocessors.

Also, this microprocessor is provided with a plurality of key registers, and has a configuration in which these key registers can be freely selected. For this reason, by appropriately using these key registers, it is possible to contribute to the simplification of the creation of the program that is encrypted and safe.

Also, in this microprocessor, as described above, the processor public key and the processor secret key are different for individual microprocessor. Also, as described above, the context before the reset cannot be recovered after the reset, and the context saved by the other microprocessor cannot be recovered. Therefore, the provider of the program can prevent the other microprocessor to execute the program by distributing only the program execution key that is encrypted specially for the specific microprocessor, for example. For this reason, it is possible to make the illegally copied program inoperable. Consequently, it is possible to contribute to the program protection.

Also, in this microprocessor, it is possible to contribute to the improve the protection of the secret contained in the program and the data, by the protection of the program and the data by the program execution key and the data decryption key described above and the protection of the execution state by the encryption of the context to be saved into the external memory 1.

As described, in the present invention, the temporary key generation unit generates the encryption key of the secret key cryptosystem at each occasion of the initialization of the microprocessor, according to the random number that is generated according to parameters inside the microprocessor, which is different for each individual microprocessor. The operation information saving unit stores the information indicating the operation state of this microprocessor at a time of the interruption or the process switching, for example, into the external memory unit by encrypting it by using the encryption key generated by the temporary key generation unit. At a time of recovering the information indicating the operation state that is saved in this way, the operation information recovery unit decrypts the information indicating the operation state that is stored in the encrypted form in the external memory unit, by using the encryption key generated by the temporary key generation unit.

The secret key generated by the temporary key generation unit is difficult to guess from the external. For this reason, by storing the operation state of this microprocessor in the external memory unit by using the secret key in this way, it becomes very difficult for the other process or the like that is executed by this processor or external of this processor to learn the content by decrypting the information indicating the operation state that is saved in the memory unit. Consequently, it is possible to maintain the tamper resistance level without using the secret key that is different at each occasion of the individual operation state saving.

In this way, there is no need for a table to manage the individual secret keys as in the case of using a plurality of secret keys, and the number of processes that can be executed simultaneously is not limited by the capacity of the table. For this reason, it is possible to contribute to the increase of the number of processes that can be executed simultaneously. Also, as the number of processes that can be executed simultaneously is not limited, it is possible to contribute to the improvement of the performance in the execution of the program for which the number of processes to be executed simultaneously is large.

It is also to be noted that, besides those already mentioned above, many modifications and variations of the above embodiments may be made without departing from the novel and advantageous features of the present invention. Accordingly, all such modifications and variations are intended to be included within the scope of the appended claims.

## Claims

1. A microprocessor, comprising:
a temporary key generation unit configured to generate an encryption key of a secret key cryptosystem at every occasion of an initialization of the microprocessor, according to a random number that is generated according to parameters used inside the microprocessor and that is different for different microprocessors;
an operation information saving unit configured to encrypt operation information indicating an operation state of the microprocessor by using the secret key generated by the temporary key generation unit and store encrypted operation information into an external memory; and
an operation information recovery unit configured to decrypt the encrypted operation information stored in the external memory, by using the secret key generated by the temporary key generation unit.

2. The microprocessor of claim 1, further comprising:
a secret key storing unit configured to store another secret key of a public key cryptosystem which cannot be read out to an external and which is different for different microprocessors;
an execution key reading unit configured to read out a program execution key encrypted by a public key corresponding to said another secret key from the external memory;
an execution key decryption unit configured to decrypt the program execution key read out by the execution key reading unit by using said another secret key; and
a program execution unit configured to decrypts a content of a prescribed address in the external memory by using the program execution key decrypted by the execution key decryption unit.

3. The microprocessor of claim 2, further comprising:
an arbitrary key storing unit configured to store a plurality of arbitrary encryption keys; and
a key specifying unit configured to specify any one of the secret key generated by the temporary key generation unit, the program execution key read out by the execution key reading unit, and the arbitrary encryption keys stored by the arbitrary key storing unit, as an access key to be used in making an access to the external memory when the access is commanded from a currently executed program without specifying the access key.

4. The microprocessor of claim 3, further comprising:
a key storing unit configured to store an encryption key that is generated according to the random number that is generated according to the parameters used inside the microprocessor and that is different for different microprocessors, into the arbitrary key storing unit.

5. The microprocessor of claim 4, further comprising:
an allocation unit configured to allocate a unique identification information to each one of the encryption key generated by the temporary key generation unit, the program execution key read out by the execution key reading unit, and the arbitrary encryption keys stored in the arbitrary key storing unit;
a cache unit configured to read out and store data of the external memory in units of prescribed blocks; and
a management unit configured to store an address information indicating at least an encrypted block among the data of the external memory stored by the cache unit, in correspondence to the identification information indicating a key to be used in encrypting the encrypted block indicated by the address information.

6. The microprocessor of claim 5, further comprising:
an access control unit configured to make an access to the data stored in the cache unit, when the identification information of a key specified by the key specifying unit coincides with the identification information stored by the management unit, at a time of an access to the external memory.

7. A method for operating a microprocessor, comprising:
generating an encryption key of a secret key cryptosystem at every occasion of an initialization of the microprocessor, according to a random number that is generated according to parameters used inside the microprocessor and that is different for different microprocessors;
encrypting operation information indicating an operation state of the microprocessor by using the secret key generated by the generating step and storing encrypted operation information into an external memory; and
decrypting the encrypted operation information stored in the external memory, by using the secret key generated by the generating step.

8. The method of claim 7, further comprising:
storing another secret key of a public key cryptosystem which cannot be read out to an external and which is different for different microprocessors;
reading out a program execution key encrypted by a public key corresponding to said another secret key from the external memory;
decrypting the program execution key read out by the reading step by using said another secret key; and
decrypting a content of a prescribed address in the external memory by using a decrypted program execution key.

9. The method of claim 8, further comprising:
storing a plurality of arbitrary encryption keys into an arbitrary key storing unit; and
specifying any one of the secret key, the program execution key, and the arbitrary encryption keys, as an access key to be used in making an access to the external memory when the access is commanded from a currently executed program without specifying the access key.

10. The method of claim 9, further comprising:
storing an encryption key that is generated according to the random number that is generated according to the parameters used inside the microprocessor and that is different for different microprocessors, into the arbitrary key storing unit.

11. The method of claim 10, further comprising:
allocating a unique identification information to each one of the encryption key generated, the program execution key, and the arbitrary encryption keys;
reading out and storing data of the external memory in units of prescribed blocks in a cache unit; and
storing an address information indicating at least an encrypted block among the data of the external memory stored in the cache unit, in correspondence to the identification information indicating a key to be used in encrypting the encrypted block indicated by the address information in a management unit.

12. The method of claim 11, further comprising:
making an access to the data stored in the cache unit, when the identification information of a key specified by the specifying step coincides with the identification information stored by the management unit, at a time of an access to the external memory.
